# EUROPÄISCHE PATENTSCHRIFT

(11) **EP 0 719 199 B1**
(45) Veröffentlichungstag und Bekanntmachung des Hinweises auf die Patenterteilung: **01.10.1997**
(21) Anmeldenummer: 94923732.5
(22) Anmeldetag: 13.07.1994
(51) Int. Cl.: B23Q 1/00

(54) **WERKZEUGKOPF MIT EXTERNER STROMVERSORGUNG**
TOOL HEAD WITH EXTERNAL CURRENT SUPPLY
TETE D'OUTIL A ALIMENTATION EXTERIEURE EN COURANT

(30) Priorität: 13.09.1993 DE 4330820
(43) Veröffentlichungstag der Anmeldung: 03.07.1996
(73) Patentinhaber: KOMET Präzisionswerkzeuge Robert Breuning GmbH, D-74354 Besigheim (DE)
(72) Erfinder: FEUFEL, Thomas, D-74369 Löchgau (DE)
(74) Vertreter: Wolf, Eckhard, Dr.-Ing.
(86) Internationale Anmeldenummer: EP9402303
(87) Internationale Veröffentlichungsnummer: WO9507792

(56) Entgegenhaltungen:
- EP-A- 0 015 248
- WO-A-84/02298
- DE-A- 2 010 200
- JP-A- 1 177 949
- JP-B- 2 046 348
- PATENT ABSTRACTS OF JAPAN vol. 7, no. 189 (M-237) (1334) 18. August 1983 & JP,A,58 090 443 (KOGYO) 30. Mai 1983

## Beschreibung

Die Erfindung betrifft einen Werkzeugkopf für den Einsatz in Werkzeugmaschinen, mit einem Grundkörper, einem axial über den Grundkörper überstehenden, mit einer in einem maschinenseitigen Stator rotierenden Maschinenspindel kuppelbaren Werkzeugschaft, mit mindestens einem vorzugsweise als Verstellmotor für einen im Grundkörper angeordneten Schieber und/oder als Meßelektronik ausgebildeten Stromverbraucher und mit einer externen Stromversorgungseinrichtung für den Stromverbraucher, wobei die Stromversorgungseinrichtung eine induktive Stromübertragungsstrecke mit einer in einem maschinenseitigen Spulengehäuse angeordneten Primärspule und einer in einem werkzeugkopfseitigen, den Werkzeugschaft ringförmig umgreifenden Spulengehäuse angeordneten Sekundärspule aufweist, und die beiden Spulengehäuse bei mit der Maschinenspindel gekuppeltem Werkzeugschaft durch einen Luftspalt voneinander getrennt sind.

Es ist ein Werkzeugkopf dieser Art bekannt (EP-A-0229399), bei welchem das maschinenseitige Spulengehäuse in der Werkzeugaufnahme der rotierenden Maschinenspindel und das werkzeugkopfseitige Spulengehäuse im Werkzeugschaft so integriert sind, daß sie im gekuppelten Zustand durch einen im wesentlichen radialen Luftspalt voneinander getrennt sind. Bei dieser Anordnung wird einmal die aufwendige Bauweise mit einer zusätzlichen elektrischen Drehdurchführung zwischen Maschinenspindel und Maschinenstator als nachteilig empfunden. Zum anderen ist die Anordnung der beiden Spulen im unmittelbaren Kupplungsbereich innerhalb der Werkzeugaufnahme störungsanfällig.

Ausgehend hiervon liegt der Erfindung die Aufgabe zugrunde, den bekannten Werkzeugkopf der eingangs angegebenen Art dahingehend zu verbessern, daß die induktive Stromübertragungsstrecke einfach - auch nachträglich - ohne die Ausbildung einer Störkontur montierbar ist und trotzdem ein automatischer Werkzeugwechsel möglich ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, das maschinenseitige Spulengehäuse statorseitig in einem den Werkzeugschaft ringförmig umgebenden freien axialen Zwischenraum zwischen Maschinenspindel und Werkzeugkopf so anzuordnen, daß es den Werkzeugschaft in Umfangsrichtung unter Freilassung eines Freiraums für den radialen Zugriff zum Werkzeugschaft nur teilweise segmentartig umfaßt und durch einen axialen Luftspalt vom werkzeugkopfseitigen Spulengehäuse getrennt ist. Mit diesen Maßnahmen wird erreicht, daß keine über den Werkzeugkopf radial hinausragende Störkontur entsteht, die den Flugkreis des Werkzeugkopfs einschränken könnte.

Vorteilhafterweise umfaßt das statorseitige Spulengehäuse den Werkzeugschaft nur um einen Winkel von 50° bis 100°, so daß genügend Freiraum für den radialen Zugriff durch einen auf der dem statorseitigen Spulengehäuse gegenüberliegenden Seite einführbaren Werkzeuggreifer verbleibt. Zu diesem Zweck kann der Werkzeugschaft mit einer durch den Freiraum hindurch radial zugänglichen Greiferrille versehen werden.

Um unter Ausgleich von Toleranzen eine optimale Einstellung des Luftspalts zu ermöglichen, wird gemäß einer vorteilhaften Ausgestaltung der Erfindung vorgeschlagen, daß das statorseitige Spulengehäuse axial und/oder in seiner Drehlage um eine zur Spindelachse parallele Achse gegenüber dem Stator verstellbar ist.

Damit auch bei hohen Übertragungsleistungen die anfallende Abwärme nach außen abgeführt werden kann, ist das vorzugsweise aus Metall, wie Aluminium, bestehende Spulengehäuse mit Kühlrippen versehen, die zweckmäßig radial überstehen.

Zur Erzielung eines möglichst engen Luftspalts zwischen den Primär- und Sekundärspulen, sind die Spulengehäuse an ihren über den Luftspalt einander axial zugewandten Seitenflächen zweckmäßig offen, während die Primär- und Sekundärspulen in einer in das betreffende Spulengehäuse eingesetzten, mechanisch belastbaren Gußmasse aus Kunststoff oder Kunstharz eingebettet sind. In dem statorseitigen und/oder werkzeugkopfseitigen Spulengehäuse ist vorzugsweise innerhalb der Gußmasse zusätzlich eine mit der Primär- bzw. Sekundärspule verbundene Primär- oder Sekundärelektronik zur Stromaufbereitung und/oder -stabilisierung angeordnet.

Eine besonders vorteilhafte bauliche Ausgestaltung der Erfindung sieht vor, daß der Werkzeugschaft und das werkzeugkopfseitige Spulengehäuse mit einer gemeinsamen Zentralschraube axial in einer Schaftaufnahme des Grundkörpers lösbar befestigt sind. Auf diese Weise ist es möglich, je nach dem verwendeten Kupplungssystem ein- und denselben Werkzeugkopf mit unterschiedlich gestalteten Werkzeugschäften zu versehen und dabei gleichzeitig das werkzeugkopfseitige Spulengehäuse am Grundkörper zu befestigen. Um eine ausreichende Drehmomentübertragung zu gewährleisten, ist der Werkzeugkopf zusätzlich über mindestens einen exzentrisch zur Zentralschraube angeordneten Mitnehmerbolzen im Grundkörper verankert. Weiter ist zur Verdrehsicherung auch das werkzeugkopfseitige Spulengehäuse zusätzlich über mindestens einen exzentrisch zur Zentralschraube angeordneten Mitnehmerbolzen im Grundkörper verankert.

Die erfindungsgemäße Anordnung der Spulengehäuse für die induktive Stromübertragung ermöglicht auch eine nachträgliche Montage auf der Maschinenseite. Zu diesem Zweck ist vorteilhafterweise am Stator lösbar angeordneter, axial und in seiner Drehlage verstellbarer Halter zur Aufnahme des statorseitigen Spulengehäuses vorgesehen.

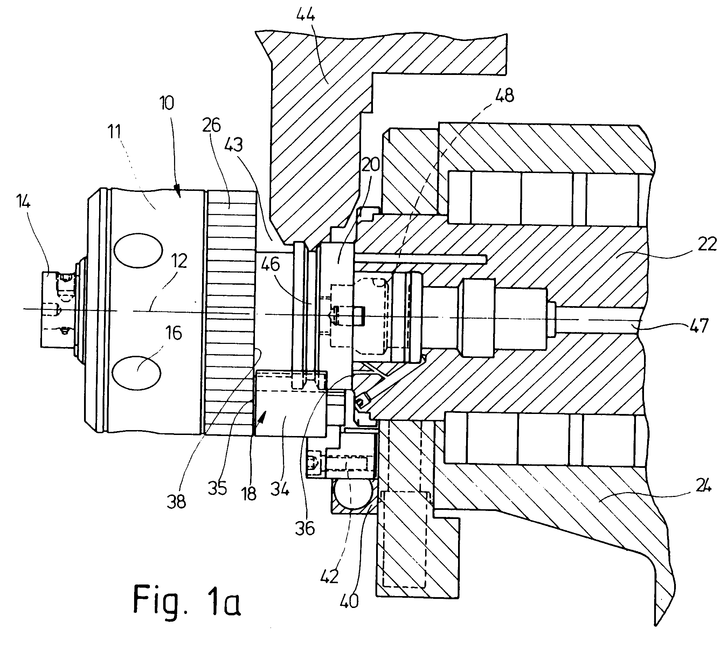

Im folgenden wird die Erfindung anhand eines in der Zeichnung in schematischer Weise dargestellten Ausführungsbeispiels näher erläutert. Es zeigen
- Fig. 1a: eine Seitenansicht eines in eine Maschinenspindel eingespannten Feindrehkopfs mit Verstellmechanismus, externer Stromzufuhr und Werkzeuggreifer;

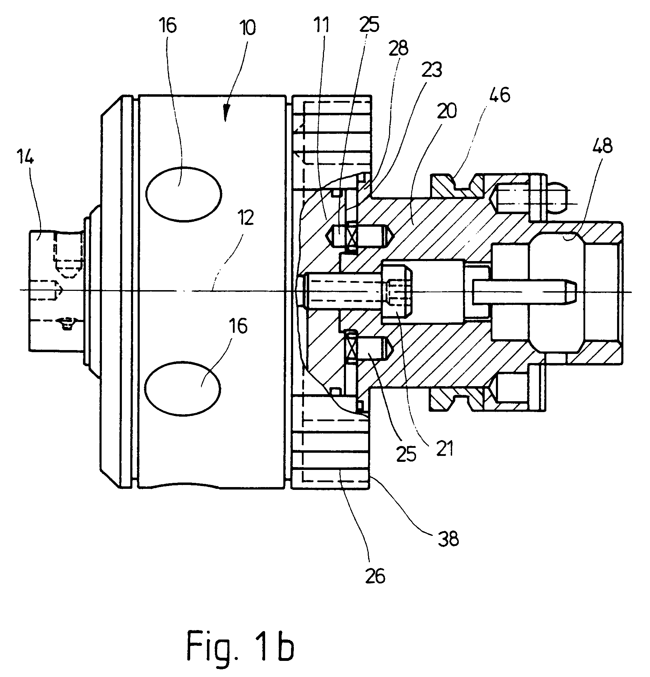

- Fig. 1b: den Feindrehkopf nach Fig. 1 in teilweise geschnittener, vergrößerter Darstellung;
- Fig. 2: eine Stirnseitenansicht der maschinenseitigen Werkzeugaufnahme nach Fig. 1 mit Werkzeuggreifer in Wechselposition;
- Fig. 3a und b: eine Draufsicht und eine Seitenansicht des statorseitigen Spulengehäuses;

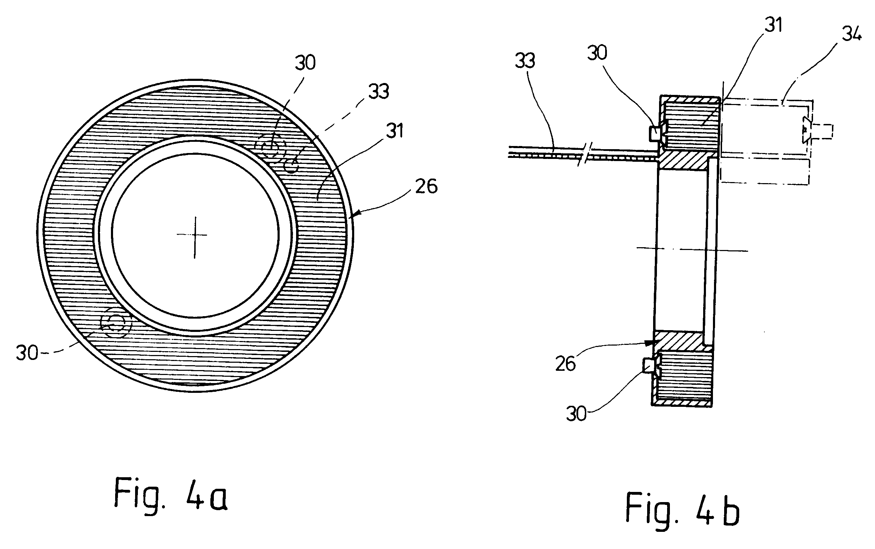

- Fig. 4a und b: eine Draufsicht und einen senkrechten Schnitt durch das werkzeugkopfseitige Spulengehäuse.

Der in der Zeichnung dargestellte, als Feindrehkopf ausgebildete Werkzeugkopf 10 besteht im wesentlichen aus einem Grundkörper 11, einem quer zur Drehachse 12 des Werkzeugkopfs 10 gegenüber dem Grundkörper 11 verstellbaren, eine Werkzeugaufnahme 14 für ein Schneidwerkzeug tragenden Schieber, mindestens einem innerhalb des Werkzeugkopfs 10 angeordneten Stromverbraucher in Form einer Meßeinrichtung zur direkten Verstellwegmessung, einem elektrischen Verstellmotor für den Schieber 14 und optoelektronischen Sendeempfängern 16 für den Datenaustausch, sowie einer Stromversorgungseinrichtung 18 und einem axial über dem Grundkörper 11 überstehenden Werkzeugschaft 20, der mit einer Maschinenspindel 22 einer Werkzeugmaschine 24 kuppelbar ist.

Der Werkzeugschaft 20 ist mit einer einzigen Zentralschraube 21 in einer Schaftaufnahme 23 am Grundkörper 11 axial befestigt. Die exzentrisch angeordneten Paßstifte 25 sorgen dabei für die Verdrehsicherung und Drehmomentübertragung.

Auf der Seite des Werkzeugschaftes 20 ist zusätzlich ein ringförmiges Spulengehäuse 26 angeordnet, das zusammen mit dem Werkzeugschaft 20 über dessen Bund 28 mit der Zentralschraube 21 am Grundkörper 11 befestigt ist. Die Verdrehsicherung des Spulengehäuses 26 erfolgt über die als Senkschrauben ausgebildeten, mit ihrem Schaft in entsprechende Bohrungen des Grundkörpers eingreifenden Mitnehmerbolzen 30.

In dem Spulengehäuse 26 befindet sich eine in einer mechanisch belastbaren Gußmasse 31 aus Kunststoff oder Kunstharz eingebettete Sekundärspule mit zugehöriger Stabilisierungselektronik, die Bestandteil einer induktiven Übertragungsstrecke der Stromversorgungseinrichtung 22 ist und über die Stromkabel 33 mit den werkzeugkopfseitigen Stromverbrauchern in Verbindung steht.

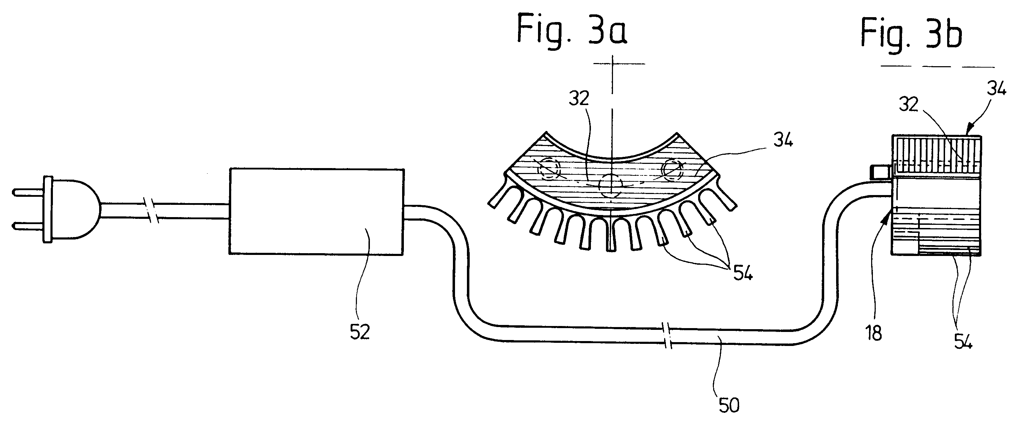

Die Primärspule der induktiven Übertragungsstrecke ist zusammen mit der zugehörigen Stromaufbereitungselektronik in einer Gußmasse 32 eingebettet und in einem statorseitigen Spulengehäuse 34 angeordnet, das radial außerhalb des Werkzeugschaftes 20 in den freien axialen Zwischenraum zwischen der Stirnfläche 36 der Maschinenspindel 22 und der freien Stirnfläche 38 des werkzeugkopfseitigen Spulengehäuses 26 eingreift. Die primärseitige Elektronik ist über das Stromkabel 50 mit einem netzgespeisten externen Schaltnetzteil 52 verbunden (Fig. 3b). Die am Spulengehäuse 34 radial überstehenden Kühlrippen 54 sorgen dafür, daß auch bei hoher Leistungsanforderung die anfallende Abwärme abgeführt wird und Überhitzungserscheinungen vermieden werden (Fig. 3a).

Zur Einstellung des Luftspalts 35 zwischen der Primär- und Sekundärspule ist das statorseitige Spulengehäuse 34 an einem statorfesten Halter 40 mittels eines Verstellmechanismus 42 sowohl in seinem Abstand zum werkzeugkopfseitigen Spulengehäuse 26 als auch in seiner Drehlage um eine zur Drehachse 12 parallele Achse verstellbar angeordnet. Der Halter 40 mit dem Spulengehäuse 26 kann auch nachträglich an eine vorhandene Werkzeugmaschine montiert werden.

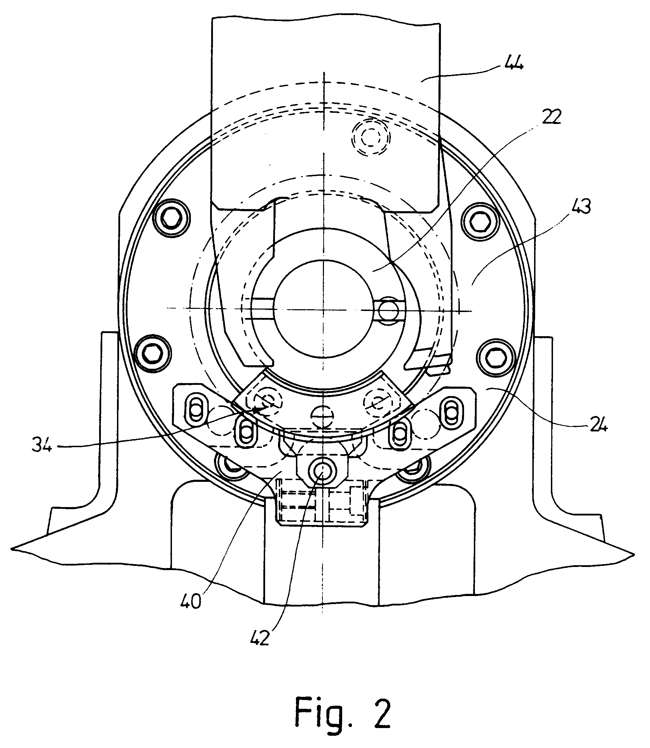

Das statorseitige Spulengehäuse 34 erstreckt sich segmentartig nur über einen Teilumfang von etwa 70° des Werkzeugschaftes 20 und läßt den überwiegenden Teil des Schaftumfangs unter Bildung eines Freiraumes 43 für den Zugriff eines Werkzeuggreifers 44 für den automatischen Werkzeugwechsel frei (Fig. 2). Beim Werkzeugwechsel wird der Werkzeugkopf 10 an der Greiferrille 46 vom Werkzeuggreifer 44 von der dem statorseitigen Spulengehäuse 26 gegenüberliegenden Seite her erfaßt und bei gelöster Werkzeugkupplung axial gegenüber der Maschinenspindel 22 verschoben.

Die Kupplung des Werkzeugkopfes 10 mit der Maschinenspindel 22 erfolgt über einen maschinenseitig über die Zugstange 47 betätigbaren Spannmechanismus, der von der Maschinenseite aus in den Hohlraum 48 des Werkzeugschafts 20 eingreift und den Werkzeugkopf 10 unter Herstellung einer Planflächenverspannung und einer Radialverspannung mit der Maschinenspindel 22 kuppelt.

Zusammenfassend ist folgendes festzustellen: Die Erfindung bezieht sich auf einen Werkzeugkopf 10 für den Einsatz in Werkzeugmaschinen mit einem Grundkörper 11, einem axial über den Grundkörper 11 überstehenden, mit einer in einem maschinenseitigen Stator 24 rotierenden Maschinenspindel 22 kuppelbaren Werkzeugschaft 20, mindestens einem werkzeugkopfseitigen Stromverbraucher und einer externen Stromversorgungseinrichtung 18 für den Stromverbraucher. Die Stromversorgungseinrichtung 18 weist eine induktive Stromübertragungsstrecke mit einer in einem maschinenseitigen Spulengehäuse 34 angeordneten Primärspule und einer in einem werkzeugkopfseitigen, den Werkzeugschaft 20 ringförmig umgreifenden Spulengehäuse 26 angeordneten Sekundärspule auf. Um die induktive Stromübertragungsstrecke 26,34 besonders einfach auch nachträglich ohne die Ausbildung einer Störkontur montieren zu können und trotzdem einen automatischen Werkzeugwechsel zu ermöglichen, wird gemäß der Erfindung vorgeschlagen, daß das maschinenseitige Spulengehäuse 34 statorseitig in einen den Werkzeugschaft 20 ringförmig umgebenden freien axialen Zwischenraum zwischen Maschinenspindel 22 und Werkzeugkopf eingreift, den Werkzeugschaft 20 in Umfangsrichtung unter Freilassung eines Freiraumes 43 für den radialen Zugriff zum Werkzeugschaft 20 nur teilweise segmentartig umfaßt und durch einen axialen Luftspalt 35 vom werkzeugkopfseitigen Spulengehäuse 26 getrennt ist.

## Patentansprüche

1. Werkzeugkopf für den Einsatz in Werkzeugmaschinen, mit einem Grundkörper (11), einem axial über den Grundkörper (11) überstehenden, mit einer in einem maschinenseitigen Stator (24) rotierenden Maschinenspindel (22) kuppelbaren Werkzeugschaft (20), mit mindestens einem vorzugsweise als Verstellmotor für einen im Grundkörper angeordneten Schieber und/oder als Meßelektronik ausgebildeten Stromverbraucher und mit einer externen Stromversorgungseinrichtung (18) für den Stromverbraucher, wobei die Stromversorgungseinrichtung (18) eine induktive Stromübertragungsstrecke mit einer in einem maschinenseitigen Spulengehäuse (34) angeordneten Primärspule und einer in einem werkzeugkopfseitigen, den Werkzeugschaft (20) ringförmig umgreifenden Spulengehäuse (26) angeordneten Sekundärspule aufweist und wobei die beiden Spulengehäuse (26,34) bei mit der Maschinenspindel (22) gekuppeltem Werkzeugschaft durch einen Luftspalt voneinander getrennt sind, **dadurch gekennzeichnet**, daß das maschinenseitige Spulengehäuse (34) statorseitig in einen den Werkzeugschaft (20) ringförmig umgebenden freien axialen Zwischenraum zwischen der Maschinenspindel (22) und dem Werkzeugkopf (10) eingreift, den Werkzeugschaft (20) in Umfangsrichtung unter Freilassung eines Freiraums (43) für den radialen Zugriff zum Werkzeugschaft (20) nur teilweise segmentartig umfaßt und durch einen axialen Luftspalt (35) vom werkzeugkopfseitigen Spulengehäuse (26) getrennt ist.

2. Werkzeugkopf nach Anspruch 1, **dadurch gekennzeichnet**, daß der Werkzeugschaft (20) eine durch den Freiraum (43) hindurch radial zugängliche Greiferrille (46) aufweist.

3. Werkzeugkopf nach Anspruch 1 oder 2, **dadurch gekennzeichnet**, daß das statorseitige Spulengehäuse (34) zur Einstellung des Luftspalts (35) axial und/oder in seiner Drehlage um eine zur Werkzeugachse (12) parallelen Achse gegenüber dem Stator (24) verstellbar ist.

4. Werkzeugkopf nach einem der Ansprüche 1 bis 3, **dadurch gekennzeichnet**, daß das statorseitige Spulengehäuse (34) mit vorzugsweise radial überstehenden Kühlrippen (54) versehen ist.

5. Werkzeugkopf nach einem der Ansprüche 1 bis 4, **dadurch gekennzeichnet**, daß die Spulengehäuse (26,34) an ihren über den Luftspalt (35) einander axial zugewandten Seitenflächen (36,38) offen sind und daß die Primär- und Sekundärspulen in einer in das betreffende Spulengehäuse eingesetzten, mechanisch belastbaren Gußmasse (31,32) aus Kunststoff oder Kunstharz eingebettet sind.

6. Werkzeugkopf nach einem der Ansprüche 1 bis 5, **dadurch gekennzeichnet**, daß im statorseitigen und/oder werkzeugkopfseitigen Spulengehäuse (26,34) eine mit der Primär- bzw. Sekundärspule verbundene Primär- oder Sekundärelektronik zur Stromaufbereitung und/oder -Stabilisierung angeordnet ist.

7. Werkzeugkopf nach einem der Ansprüche 1 bis 6, **dadurch gekennzeichnet**, daß der Werkzeugschaft (20) und das werkzeugkopfseitige Spulengehäuse (26) mit einer gemeinsamen Zentralschraube (21) axial in einer Schaftaufnahme (23) des Grundkörpers (11) lösbar befestigt sind.

8. Werkzeugkopf nach Anspruch 7, **dadurch gekennzeichnet**, daß der Werkzeugschaft (20) zusätzlich über mindestens einen exzentrisch zur Zentralschraube (21) angeordneten Mitnehmerbolzen (25) im Grundkörper (11) verankert ist.

9. Werkzeugkopf nach Anspruch 7 oder 8, **dadurch gekennzeichnet**, daß das werkzeugkopfseitige Spulengehäuse (26) zusätzlich über mindestens einen exzentrisch zur Zentralschraube (21) angeordneten Mitnehmerbolzen (30) im Grundkörper verankert ist.

10. Werkzeugkopf nach einem der Ansprüche 1 bis 9, **gekennzeichnet durch** einen lösbar am Stator angeordneten axial und in seiner Drehlage verstellbaren Halter (40) zur Aufnahme des statorseitigen Spulengehäuses (34).

## Claims

1. A tool head for use in machine tools, comprising a base body (11), a tool shaft (20) which protrudes axially over the base body (11) and which is couplable to a machine spindle (22) which rotates in a stator (24) positioned at the machine side, at least one power consumer which is preferably formed to be an adjusting motor for a slider positioned in the base body and/or measuring electronics, and an external power supply device (18) for the power consumer, wherein the power supply device (18) has an inductive current transfer path having a primary coil positioned in a coil housing (34) which is located on the machine side and a secondary coil positioned in a coil housing (26) which is located on the tool side and which encloses the tool shaft (20) in a ring-like manner, and wherein the two coil housings (26,34) are separated from each other by an air gap when the tool shaft is coupled to the machine spindle (22), characterized in that the coil housing (34) which is located on the machine side extends on the stator side into a free axial space between the machine spindle (22) and the tool head (10), the space surrounding the tool shaft (20) in a ring-like manner, in that the coil housing (34) embraces the tool shaft (20) only partially in a segment-like fashion in the circumferential direction while leaving a clearance zone (43) in order to enable the radial access to the tool shaft (20), and in that the coil housing (34) is separated from the coil housing (24) which is positioned at the tool head side by an axial air gap (35).

2. The tool head according to claim 1, characterized in that the tool shaft (20) has a clamp groove (46) which is radially accessible through the clearance zone (43).

3. The tool head according to claim 1 or 2, characterized in that the coil housing (34) which is positioned at the stator side is adjustable with respect to the stator (24) axially in order to adjust the air gap (35) and/or in its rotational position about an axis which is parallel to the tool axis (12).

4. The tool head according to one of the claims 1 to 3, characterized in that the coil housing (34) which is positioned at the stator side has cooling fins (54) which preferably protrude radially.

5. The tool head according to one of the claims 1 to 4, characterized in that the coil housings (26,34) are open at their face areas (36,38) which face each other in the axial direction over the air gap (35), and in that the primary and secondary coils are embedded in a cast material (31,32) consisting of plastic or resin which is set into the corresponding coil housing and which is mechanically resilient.

6. The tool head according to one of the claims 1 to 5, characterized in that primary or secondary electronics connected to the primary or secondary coil, respectively, are arranged in the coil housing (26,34) at the stator and/or tool head side in order to condition and/or stabilize the current.

7. The tool head according to one of the claims 1 to 6, characterized in that the tool shaft (20) and the coil housing (26) at the tool head side are removably fastened axially in a shaft holder (23) of the base body (11) by way of a common central bolt (21).

8. The tool head according to claim 7, characterized in that the tool shaft (20) is additionally anchored in the base body (11) by at least one locating pin (25) which is positioned excentrically with respect to the central bolt (21).

9. The tool head according to claim 7 or 8, characterized in that the coil housing (26) positioned at the tool head side is additionally anchored in the base body by at least one locating pin (30) which is positioned excentrically with respect to the central bold (21).

10. The tool head according to one of the claims 1 to 9, characterized by a holder (40) for receiving the coil housing (34) at the stator side, the holder (40) being removably located on the stator and adjustable axially and in its rotational position.

## Revendications

1. Tête d'outil pour l'utilisation dans des machines-outils, comprenant un corps de base (11), une tige d'outil (20) dépassant axialement du corps de base (11) et pouvant être couplée avec une broche de machine (22) tournant dans un stator (24) situé du côté machine, au moins un consommateur de courant réalisé de préférence sous la forme d'un servomoteur pour un coulisseau disposé dans le corps de base et/ou d'une électronique de mesure, et un dispositif d'alimentation externe (18) pour le consommateur de courant, le dispositif d'alimentation (18) comportant une voie de transmission de courant inductive avec une bobine primaire montée dans une boîte de bobine (34) située du côté machine et une bobine secondaire montée dans une boîte de bobine (26) située du côté tête d'outil et enveloppant la tige d'outil (20) en forme d'anneau, et les deux boîtes de bobines (26, 34) étant séparées l'une de l'autre par un entrefer lorsque la tige d'outil est couplée avec la broche de machine (22), **caractérisée en ce** que la boîte de bobine (34) située du côté machine s'engage du côté stator dans un espace intermédiaire libre entre la broche de machine (22) et la tête d'outil (10), orienté dans le sens axial et entourant la tige d'outil (20) en forme d'anneau, qu'elle n'entoure la tige d'outil (20) que partiellement dans le sens circonférentiel, à la manière d'un segment, en laissant un espace libre (43) pour l'accès radial à la tige d'outil (20), et qu'elle est séparée de la boîte de bobine (26) située du côté tête d'outil par un entrefer axial (35).

2. Tête d'outil selon la revendication 1, caractérisée en ce que la tige d'outil (20) présente une gorge de préhension (46) radialement accessible au travers de l'espace libre (43).

3. Tête d'outil selon la revendication 1 ou 2, caractérisée en ce que, pour le réglage de l'entrefer (35), la boîte de bobine (34) située du côté stator peut être réglée dans le sens axial et/ou tournée par rapport au stator (24) autour d'un axe parallèle à l'axe (12) de l'outil.

4. Tête d'outil selon l'une des revendications 1 à 3, caractérisée en ce que la boîte de bobine (34) située du côté stator comporte des ailettes de refroidissement (54) dépassant de préférence dans le sens radial.

5. Tête d'outil selon l'une des revendications 1 à 4, caractérisée en ce que les boîtes de bobines (26, 34) sont ouvertes sur leurs surfaces latérales (36, 38) tournées axialement l'une vers l'autre sur l'entrefer (35), et que les bobines primaire et secondaire sont encastrées dans une masse de remplissage (31, 32) en matière plastique ou en résine synthétique insérée dans la boîte de bobine considérée et pouvant être sollicitée mécaniquement.

6. Tête d'outil selon l'une des revendications 1 à 5, caractérisée en ce que dans la boîte de bobine (26, 34) située du côté stator et/ou du côté tête d'outil, est disposée une électronique primaire ou secondaire pour le traitement et/ou la stabilisation du courant, reliée à la bobine primaire ou secondaire.

7. Tête d'outil selon l'une des revendications 1 à 6, caractérisée en ce que la tige d'outil (20) et la boîte de bobine (26) située du côté tête d'outil sont fixées axialement de manière amovible, au moyen d'une vis centrale (21) commune, dans un logement de tige (23) du corps de base (11).

8. Tête d'outil selon la revendication 7, caractérisée en ce que la tige d'outil (20) est en plus ancrée dans le corps de base (11) par l'intermédiaire d'au moins une broche d'entraînement (25) excentrée par rapport à la vis centrale (21).

9. Tête d'outil selon la revendication 7 ou 8, caractérisée en ce que la boîte de bobine (26) située du côté tête d'outil est en plus ancrée dans le corps de base par l'intermédiaire d'au moins une broche d'entraînement (30) excentrée par rapport à la vis centrale (21).

10. Tête d'outil selon l'une des revendications 1 à 9, caractérisée en ce qu'elle comprend pour la réception de la boîte de bobine (34) située du côté stator, un support (40) monté de manière amovible sur le stator dont les positions axiale et angulaire sont réglables.
